# FASCICULE DE BREVET EUROPEEN

(11) **EP 3 941 660 B1**
(45) Date de publication et mention de la délivrance du brevet: **08.11.2023**
(21) Numéro de dépôt: 20725888.0
(22) Date de dépôt: 12.03.2020
(51) Int. Cl.: B22D 19/14, C22C 1/10, C22C 47/08, C23C 2/00, F27B 14/06, F27B 14/08, F27B 14/20, F27D 3/00, C04B 35/80

(54) **OUTILLAGE DE SUPPORT POUR PREFORMES POREUSES A INFILTRER ET FOUR UTILISANT UN TEL OUTILLAGE**
STÜTZWERKZEUG FÜR PORÖSE VORFORMEN UND OFEN MIT EINEM SOLCHEN WERKZEUG
SUPPORT TOOLING FOR POROUS PREFORMS TO BE INFILTRATED AND OVEN USING SUCH A TOOLING

(30) Priorité: 19.03.2019 FR 1902822
(43) Date de publication de la demande: 26.01.2022
(73) Titulaire: Safran Ceramics, 33185 Le Haillan (FR)
(72) Inventeur: BOUVIER, Rémi, Pierre, Robert, 77550 MOISSY-CRAMAYEL (FR); LELEU, Charles, 77550 MOISSY-CRAMAYEL (FR); MECUSON, Gautier, 77550 MOISSY-CRAMAYEL (FR)
(74) Mandataire: Cabinet Beau de Loménie
(86) Numéro de dépôt international: PCT/FR2020/050522
(87) Numéro de publication internationale: WO 2020/188196

(56) Documents cités:
- WO-A1-2018/162829
- CN-U- 205 270 846
- DE-A1- 10 350 273

## Description

### Domaine Technique

La présente invention se rapporte au domaine général de la fabrication de pièces en matériau composite à matrice céramique (CMC) dans lesquels on infiltre une préforme poreuse par un métal fondu. La présente invention vise plus particulièrement un outillage de support pour préformes poreuses destinées à être infiltrées par un métal fondu.

### Technique antérieure

Différents procédés de fabrication de pièces en matériau composite à matrice céramique sont connus. On connait le procédé dit « Pre-preg » dans lequel des fils pré imprégnés de résine précurseur de carbone sont mis sous la forme de nappes qui sont ensuite drapées pour obtenir une préforme fibreuse. La préforme fibreuse est moulée, cuite, et enfin infiltrée par un métal (ou un alliage métallique) à l'état liquide (technique d'infiltration à l'état fondu : « MI » pour « Melt-Infiltration »). On connait encore le procédé dit « Slurry-Cast » dans lequel on peut dans un premier temps densifier partiellement une préforme fibreuse tissée par voie gazeuse, par exemple par infiltration chimique en phase gazeuse (CVI), puis introduire une poudre céramique dans la préforme pré densifiée, par exemple par immersion dans une barbotine adéquate, et enfin infiltrer la préforme par un métal fondu (MI) de façon à finaliser la densification de la pièce. Dans l'un ou l'autre des procédés présentés, l'infiltration de la préforme peut être réactive, c'est-à-dire que le métal fondu peut réagir avec une phase de matrice déjà présente dans la préforme. Le document DE10350273 A1 divulgue la fabrication de pièces en matériau composite à matrice céramique par infiltration de préformes poreuses avec du métal fondu. Traditionnellement, en raison de la conception des fours d'infiltration, les préformes poreuses sont infiltrées l'une après l'autre en les tenant avec une pince, la préforme étant directement trempée dans un bain de métal fondu ou mise en contact avec celui-ci à l'aide d'un drain, le drain pouvant être par exemple un tissu, un feutre, un mat, ou tout autre matériau poreux. Le drain est mis au contact du métal fondu d'une part, et de la préforme à infiltrer d'autre part, le métal fondu étant transféré à la préforme et infiltré dans celle-ci par capillarité à l'aide du drain.

Cette infiltration individuelle présente plusieurs inconvénients comme notamment :
- un risque d'endommagement de la préforme lors de l'installation (choc, chute, etc.),
- un risque de chute de la pièce lors de l'opération d'infiltration,
- un risque de déformation lors du serrage de la pince,
- l'impossibilité d'augmenter le nombre de préformes traitées ensemble,
- l'absence de maîtrise du positionnement de la préforme dans son environnement.

Il serait donc souhaitable de disposer d'une solution permettant d'infiltrer plusieurs préformes poreuses en même temps avec un métal fondu, et ce de manière fiable et simple.

### Exposé de l'invention

La présente invention a donc pour but de permettre une infiltration par lots de préformes poreuses par un métal fondu en proposant, selon un premier aspect, un outillage de support pour préformes poreuses destinées à être infiltrées par un métal fondu, l'outillage comprenant :
- un portant comprenant au moins deux barres de suspension s'étendant chacune longitudinalement suivant une première direction, lesdites au moins deux barres de suspensions étant maintenues espacées l'une de l'autre suivant une deuxième direction perpendiculaire à la première direction ;
- une pluralité de supports de préforme poreuse montés de manière amovible sur les barres de suspension, chaque support comprenant une première partie reliée à une des barres de suspension par une liaison coulissante suivant une troisième direction perpendiculaire aux première et deuxième directions et une deuxième partie s'étendant à partir de la première partie et comprenant des éléments de support aptes à maintenir une préforme poreuse par contact ponctuel ou linéaire.

Ainsi, l'outillage de l'invention permet de supporter une pluralité de préformes poreuses ensemble et de réaliser simultanément leur infiltration par un métal. En outre, l'outillage comprend des supports pour les préformes poreuses qui sont amovibles, ce qui permet une grande souplesse dans la configuration de chargement. Chaque support est en outre montés sur une barre de suspension de manière coulissante dans une direction correspondant au sens de déplacement des préformes vers le bain de métal fondu ou les drains, ce qui permet à la fois d'éviter un basculement des supports tout en autorisant un degré de liberté en translation verticale notamment lors de la mise en contact des préformes avec le bain de métal fondu ou les drains.

Selon un aspect particulier de l'outillage de l'invention, la première partie de chaque support de préforme poreuse comporte deux oreilles s'étendant suivant la troisième direction, au moins une oreille étant engagée dans une rainure présente sur une des barres de suspension et s'étendant suivant la troisième direction, chaque oreille comportant au niveau de son extrémité libre un trou oblong dans lequel est logé un axe de suspension reposant sur une des barres de suspension.

Selon un autre aspect particulier de l'outillage de l'invention, chaque barre de suspension comprend une ou plusieurs encoches en forme de V aptes à recevoir un axe de suspension.

Les encoches en forme de V assurent le contrôle du positionnement des supports sur une barre et leur maintien dans ce positionnement, ce qui est avantageux pour assurer l'équilibre du chargement de l'outillage de support.

Selon un mode de réalisation de l'outillage de l'invention, la deuxième partie de chaque support de préforme poreuse comprend deux bras longitudinaux s'étendant suivant la troisième direction, chaque bras comportant un ou plusieurs organes de serrage aptes à coopérer avec des orifices présents sur une préforme poreuse. Chaque bras longitudinal de la deuxième partie de chaque support de préforme poreuse peut comporter en outre un ou plusieurs bossage sur sa face en regard de l'autre bras. Les bossages permettent de limiter les déplacements horizontaux des préformes, et ce avec un contact minimum (linéaire voire ponctuel).

Selon un autre mode de réalisation de l'outillage de l'invention, la deuxième partie de chaque support de préforme poreuse comprend deux bras transversaux s'étendant suivant la deuxième direction, chaque bras transversal comportant une projection s'étendant suivant la première direction, chaque projection étant apte à coopérer avec une encoche présente sur la préforme poreuse. La deuxième partie de chaque support de préforme poreuse peut comprendre en outre une vis anti-basculement et/ou une butée réglable présente dans la partie inférieure de la deuxième partie afin de maintenir les préformes suivant un plan déterminé.

La présente invention a également pour objet un four destiné à être utilisé pour infiltrer des préformes poreuses par un métal fondu, le four comprenant au moins :
- un outillage de support selon l'invention, au moins plusieurs supports de la pluralité de support dudit outillage étant chargés d'une préforme poreuse,
- un dispositif de mesure de masse auquel est relié l'outillage de support,
- un creuset ayant un volume interne destiné à contenir un métal fondu, et
- un dispositif de déplacement apte à déplacer le creuset ou l'outillage de support l'un par rapport à l'autre entre une première configuration dans laquelle les préformes poreuses sont à l'extérieur du volume interne du creuset ou à distance de drains en communication avec le volume interne du creuset et une deuxième configuration dans laquelle les préformes poreuses sont au moins partiellement présentes dans ledit volume interne ou en contact avec lesdits drains.

L'invention concerne encore un procédé d'infiltration d'une pluralité de préforme poreuses par un métal fondu, l'infiltration étant réalisée dans un four selon l'invention, le procédé comprenant :
- le chargement d'une pluralité de préformes poreuses sur un outillage de support selon l'invention,
- la mise en contact directe ou via des drains des préformes poreuses avec le métal fondu,
- l'infiltration des préformes poreuses par le métal fondu,
- la mesure de la masse des préformes poreuses au cours de l'infiltration, et
- le dégagement des préformes poreuses du métal fondu lorsque la masse de la préforme mesurée atteint une valeur prédéterminée.

### Brève description des dessins

[Fig. 1] La figure 1 est une vue schématique en perspective d'un outillage de support conformément à un mode de réalisation de l'invention,
[Fig. 2] La figure 2 est une vue schématique de côté d'un support pour préformes poreuse de l'outillage de support de la figure 1,
[Fig. 3] La figure 3 est une vue schématique en perspective d'un support pour préformes poreuse de l'outillage de support de la figure 1,
[Fig. 4] La figure 4 est une vue schématique de face d'un support pour préformes poreuse de l'outillage de support de la figure 1,
[Fig. 5] La figure 5 est une vue schématique en perspective de l'outillage de support de la figure 1 chargé d'une pluralité de préformes poreuses,
[Fig. 6] La figure 6 est une vue schématique en coupe d'un four pour l'infiltration par du métal fondu utilisant l'outillage de support de la figure 1,
[Fig. 7] La figure 7 est une vue schématique en perspective d'un support pour outillage de support conformément à un autre mode de réalisation de l'invention,
[Fig. 8] La figure 8 est une vue schématique de face d'un support pour préformes poreuse de l'outillage de support de la figure 7 avec une préforme poreuse,
[Fig. 9] La figure 9 est une vue schématique de côté d'un support pour préformes poreuse de l'outillage de support de la figure 7,
[Fig. 10] La figure 10 est une vue schématique en perspective d'un support pour préformes poreuse de l'outillage de support de la figure 7.

### Description des modes de réalisation

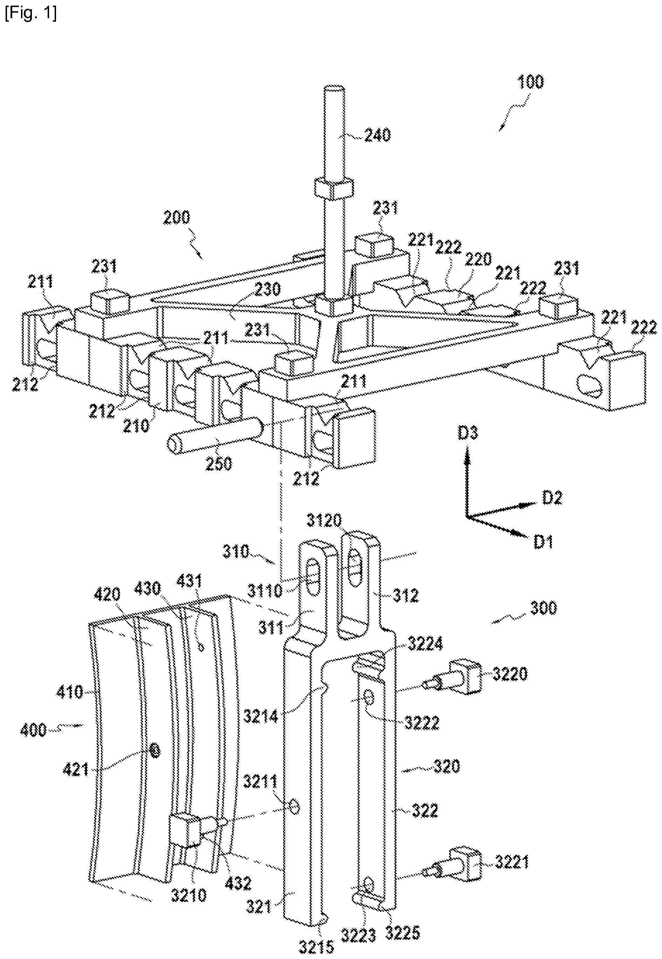

La figure 1 représente un outillage de support 100 pour le chargement de préformes poreuses destinées à être infiltrées par un métal fondu conformément à un mode de réalisation de l'invention.

L'outillage de support 100 comprend un portant 200 comprenant deux barres de suspension 210 et 220 s'étendant chacune longitudinalement suivant une première direction D1. Les barres de suspension 210 et 220 sont fixées à un cadre 230 par des organes de serrage 231 de manière à être maintenues espacées l'une de l'autre suivant une deuxième direction D2 perpendiculaire à la première direction D1. Le cadre 230 est fixé au niveau de sa partie centrale à une tige d'interface 240 destinée à être relié à un dispositif de mesure de masse d'un four comme expliqué plus loin.

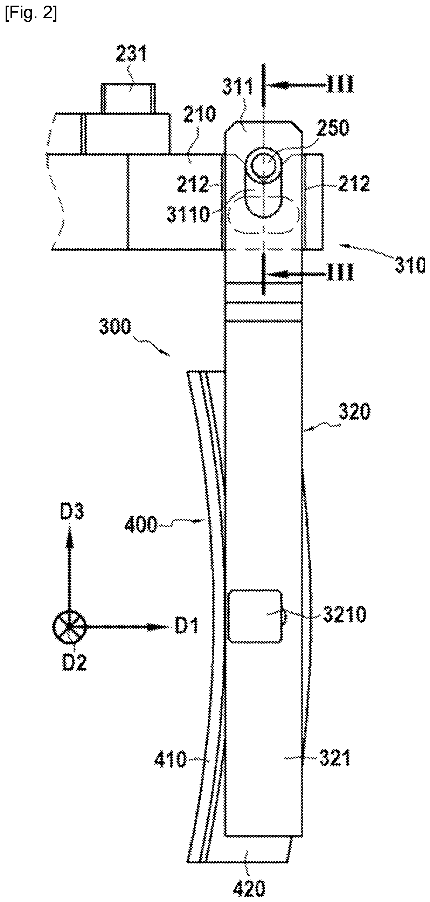

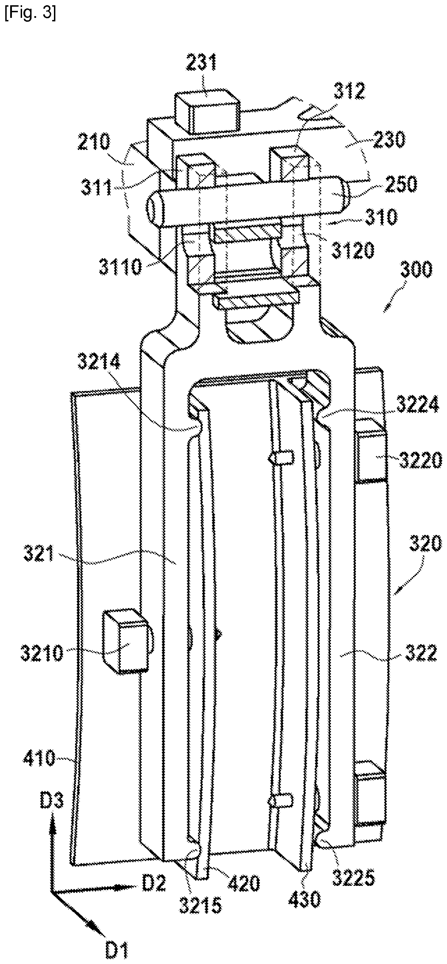

L'outillage de support 100 comprend en outre plusieurs supports 300 chacun destiné à maintenir une préforme poreuse 400 lors de son infiltration avec un métal fondu (un seul support 300 est représenté sur la figure 1). Chaque support 300 comprend une première partie 310 destinée à être reliée à une des barres de suspension par une liaison coulissante suivant une troisième direction D3 perpendiculaire aux première et deuxième directions D1 et D2 et une deuxième partie 320 s'étendant à partir de la première partie 310 et comprenant des éléments de support aptes à maintenir une préforme poreuse par contact ponctuel ou linéaire. Plus précisément, dans l'exemple décrit ici, la première partie 310 est formée ici d'une première oreille 311 comportant un trou oblong 3110 et d'une deuxième oreille 312 comportant un trou oblong 3120. Le support 300 est monté sur une des barres de suspension, ici la barre 210, en plaçant les deux oreilles 311 et 312 d'un côté et de l'autre de la barre de manière à ce que les trous oblongs 3110 et 3120 desdites oreilles soient présents au-dessus de la barre comme illustré sur les figure 2 et 3. Un axe de suspension 250 est alors logé dans les trous oblongs 3110 et 3120 afin de retenir le support 300 sur la barre 210. Dans sa position de retenue, l'axe de suspension 250 repose sur la barre 210 et supporte les oreilles 311 et 312 du support 300. Selon une caractéristique de l'invention, chaque barre de suspension 210, 220 comprend sur sa partie supérieure plusieurs encoches respectivement 211 et 221 en forme de V dans lesquelles les axes de suspension 250 sont destinées à reposer. Les encoches en forme de V assurent le contrôle du positionnement des supports sur une barre et leur maintien dans ce positionnement, ce qui est avantageux pour assurer l'équilibre du chargement de l'outillage de support. Selon une autre caractéristique de l'invention, chaque barre de suspension 210, 220 comporte des rainures respectivement 212 et 222 présentes au moins sur un bord latéral de chaque barre. Chaque rainure 212, 222 s'étend suivant la troisième direction D3 et présente une largeur légèrement supérieure à la largeur de l'oreille 311 ou 312 destinée à être logée dans une de ces rainures. Les rainures 212 et 222 permettent de bloquer la rotation des supports 300 lorsqu'ils sont montés sur les barres de suspension tout en autorisant un déplacement en translation de ces supports suivant la troisième direction D3.

Selon un mode de réalisation particulier, la deuxième partie 320 de chaque support 300 comprend deux bras longitudinaux 321 et 322 s'étendant suivant la troisième direction D3, chaque bras comportant un ou plusieurs organes de serrage aptes à coopérer avec des orifices présents sur une préforme poreuse. Dans l'exemple décrit ici, le bras longitudinal 321 est muni d'une première vis de centrage 3210 coopérant avec un premier orifice de centrage 3211 présent sur le bras 321, la vis de centrage 3210 comportant un filetage coopérant avec un taraudage ménagé dans l'orifice de centrage 3211. Le bras longitudinal 322 est muni d'une deuxième et d'une troisième vis de centrage 3220 et 3221 coopérant respectivement avec un deuxième et un troisième orifices de centrage 3222 et 3223 présents sur le bras 322, les vis de centrage 3220 et 3221 comportant un filetage coopérant avec un taraudage ménagé dans les orifices de centrage 3222 et 3223.

Chaque support 300 est chargé avec une préforme poreuse 400. Dans l'exemple décrit ici, les préformes 400 correspondent à des préformes de secteurs d'anneau de turbine, par exemple un anneau de turbine haute pression en matériau composite à matrice céramique (CMC) de moteur aéronautique. La réalisation d'un anneau de turbine en matériau CMC par assemblage d'une pluralité de secteurs d'anneau est notamment décrite dans le document US 2018/0142572.

Chaque préforme poreuse 400 a une forme voisine de celle du secteur d'anneau à réaliser. Chaque préforme 400 a une section sensiblement en forme de π inversé avec une base annulaire 410 dont la face interne est destinée à définir la veine d'écoulement de flux gazeux dans la turbine. Des pattes 420 et 430 s'étendent à partir de la face externe de la base annulaire 410, les pattes permettant de relier les secteurs d'anneau à une structure de support d'anneau comme décrit notamment dans le document US 2018/0142572.

Pour la réalisation des préformes poreuses 400, on peut utiliser des fils en fibres céramique, par exemple des fils en fibres SiC tels que ceux commercialisés par la société japonaise Nippon Carbon sous la dénomination "Hi-Nicalon S", ou des fils en fibres de carbone. La préforme est de préférence réalisée par tissage tridimensionnel, ou tissage multicouches avec aménagement de zones de déliaison permettant d'écarter les parties de préformes correspondant aux pattes 420 et 410.

Le tissage peut être de type interlock, comme illustré. D'autres armures de tissage tridimensionnel ou multicouches peuvent être utilisées comme par exemple des armures multi-toile ou multi-satin. On pourra se référer au document WO 2006/136755.

Après tissage, l'ébauche est mise en forme pour obtenir une préforme de secteur d'anneau qui est consolidée par infiltration chimique en phase gazeuse (CVI) d'une phase de matrice céramique afin d'être en mesure de conserver sa forme et de former une préforme poreuse 400.

Une chargées sur l'outillage de support de l'invention, les préformes poreuses 400 sont densifiées par infiltration avec du silicium liquide (« Melt Infiltration »).

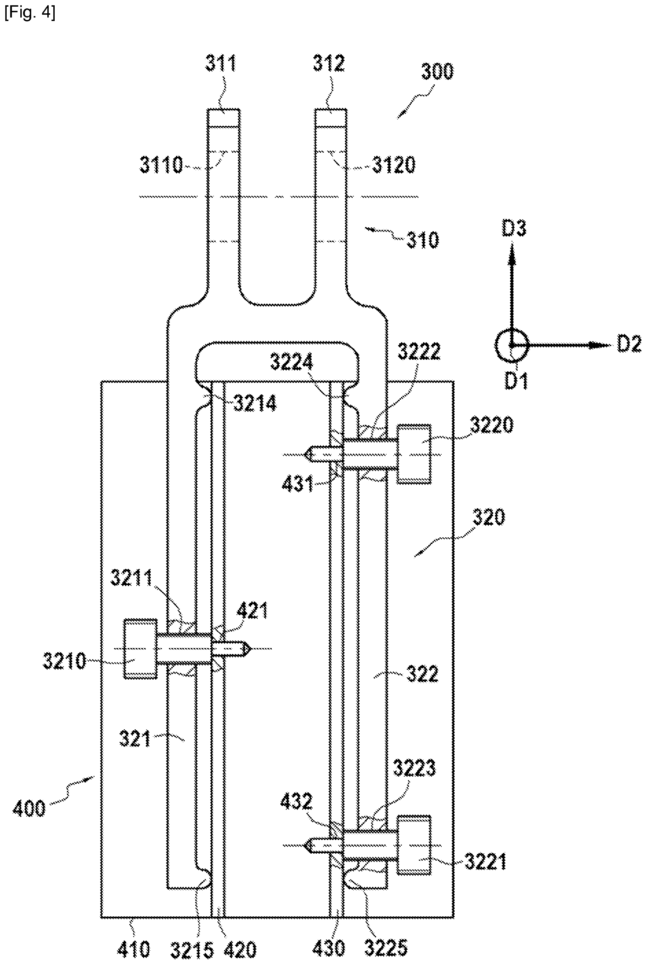

Comme illustré sur les figures 1 à 4, chaque préforme poreuse 400 est mise en place sur un support 300 en plaçant les pattes 420 et 430 entre les deux bras longitudinaux 321 et 322 du support 300 et en serrant ensuite les vis de centrage 3210, 3220 et 3221 jusqu'à ce que l'extrémité libre de chacune de ces vis pénètre respectivement dans des orifices 421, 431 et 432 présents sur les pattes 420 et 430 (figures 3 et 4). Les vis de centrage permettent la suspension verticale des préformes poreuses 400 par les orifices 421, 431 et 432, et ce avec un contact minimum (linéaire voire ponctuel). Selon une caractéristique particulière, les bras longitudinaux 321 et 322 du support 300 comportent chacun respectivement sur leur surface en regard des préformes poreuses 400 des bossages 3214, 3215 et 3224, 3225 qui permettent de limiter les déplacements horizontaux des préformes, et ce avec un contact minimum (linéaire voire ponctuel).

Une fois chargé d'une préforme poreuse 400, chaque support 300 est monté sur une des barres de suspension en plaçant les deux oreilles 311 et 312 d'un côté et de l'autre de la barre et en insérant un axe de suspension 250 dans les trous oblongs 3110 et 3120 des oreilles 311 et 312 comme expliqué précédemment.

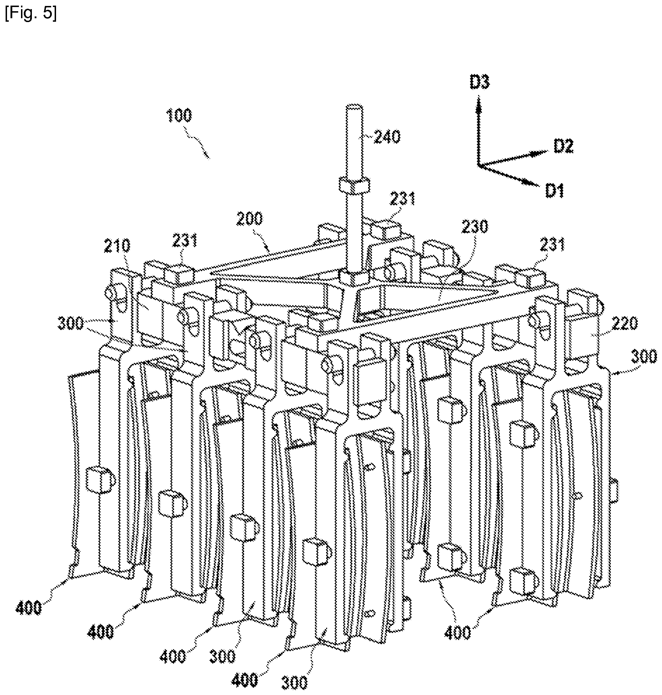

L'outillage de support de l'invention peut supporter un nombre variable de préformes poreuses. L'outillage de support 100 décrit ici peut supporter jusqu'à huit préformes poreuses 400 comme illustrées sur la figure 5. Bien entendu, en fonction des besoins et des dimensions de l'outillage de support de l'invention, celui-ci peut supporter un nombre plus ou moins important de préformes poreuses. On veillera toutefois à avoir un nombre équivalent de préformes poreuses et une répartition symétrique de celle-ci sur chaque barre de suspension afin d'équilibrer l'outillage de support et ne pas perturber la mesure de masse lors de l'infiltration.

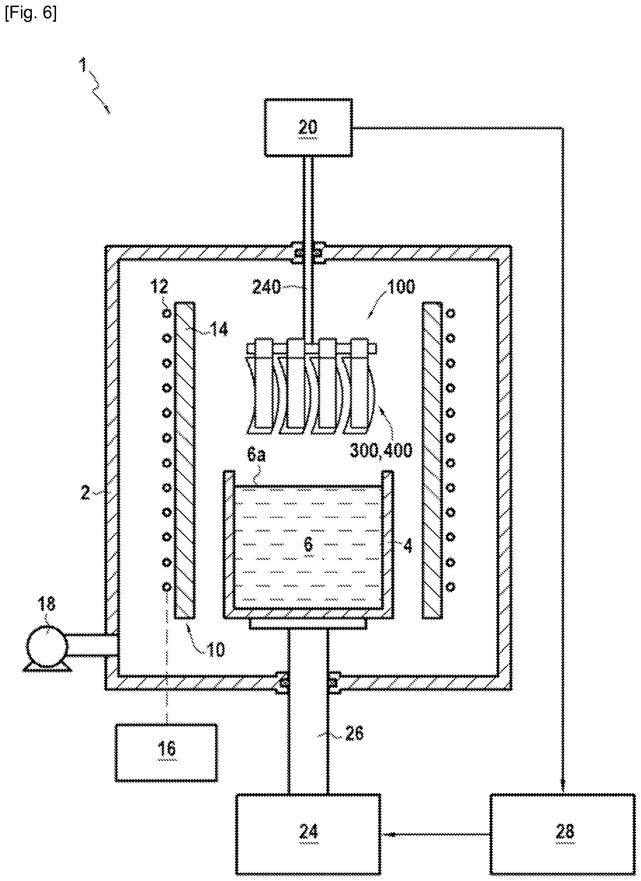

La figure 6 montre une vue en coupe d'un four 1 selon un mode de réalisation de l'invention pouvant être utilisé dans un procédé d'infiltration selon l'invention. Le four 1 comprend une enceinte 2 hermétique à l'intérieur de laquelle sont présents un creuset 4 ayant un volume interne contenant un métal fondu 6, et un outillage de support 100 comprenant une pluralité de supports 300 chacun chargé d'une préforme poreuse 400 comme décrits ci-avant.

Le creuset 4 peut être en un matériau céramique. Le métal fondu 6 peut par exemple être du silicium ou un alliage de silicium. Le four 1 est ici muni d'un système de chauffage par induction 10 comprenant une bobine d'induction 12 et un suscepteur 14 qui sont disposés autour du creuset 4 et de la préforme 8 dans l'enceinte 2 du four 1. Le système de chauffage comprend en outre, de façon connue, un générateur haute fréquence 16 relié à la bobine 12 de façon à générer un champ magnétique variable à l'aide de la bobine 12. Le suscepteur 14 peut par exemple être un cylindre en graphite. Le four 1 peut en outre être muni d'une pompe à vide 18 en communication fluidique avec l'intérieur de l'enceinte 2, de façon à réaliser le procédé d'infiltration sous vide. On notera qu'un autre type de four que celui illustré peut être utilisé, en particulier le four peut comprendre un système de chauffage résistif au lieu d'un système inductif.

Le four 1 comprend un dispositif de mesure de la masse des préformes 400 correspondant ici à une balance 20 du type peson, à laquelle l'outillage de support 400 est suspendue par le biais de la tige d'interface 240 de l'outillage de support 100. Dans cet exemple, la balance 20 est située à l'extérieur de l'enceinte 2 du four 1, au-dessus de l'enceinte 2. Bien entendu, d'autres dispositifs de mesure de masse peuvent être utilisés sans sortir du cadre de la présente invention.

Le four 1 comprend en outre un dispositif de déplacement comprenant ici un vérin 24 ayant une tige 26 sur laquelle est monté le creuset 4. Dans cet exemple, le vérin 24 est situé à l'extérieur de l'enceinte 2 du four 1, au-dessous de l'enceinte 2. De la sorte, le vérin 20 permet de déplacer le creuset 4 avec un mouvement de translation verticale à l'intérieur de l'enceinte 2 du four 1, notamment en direction des préformes poreuses 400 présentes sur l'outillage de support 100. Ainsi, le creuset 4 est mobile en translation verticale dans l'enceinte 2. Dans une variante non illustrée, le creuset peut être monté fixe dans le four, et la préforme peut être mobile en translation verticale.

Dans l'exemple illustré, le four 1 comprend également un système de contrôle 28 de la position relative entre les préformes et le creuset, qui est configuré pour commander le vérin 24 en fonction de l'évolution de la masse des préformes 400 telle que mesurée par la balance 20. Ce système de contrôle 28 peut être par exemple un automate ou un ordinateur équipé d'une carte d'acquisition à entrées/sorties. Le système de contrôle 28 peut recevoir en entrée des signaux électriques provenant de la balance 20, et envoyer des signaux de commande en sortie au vérin 24.

L'infiltration des préformes poreuses 400 est réalisée par mise en contact desdites préformes avec le métal fondu 6 qui peut par exemple être du silicium ou un alliage de silicium, le métal fondu infiltrant la porosité des préformes par capillarité. La mise en contact peut être directe, c'est-à-dire que les préformes sont directement trempées dans le bain de métal fondu, ou indirecte en mettant les préformes en contact avec un ou plusieurs drains (non représentés sur la figure 6) eux-mêmes en contact avec le bain de métal fondu qui est alors acheminé jusqu'aux préformes par capillarité. La mise en contact ou non des préformes avec le métal fondu et, par conséquent, le contrôle de l'infiltration des préformes par le métal fondu est réalisé par la commande du vérin 24. L'infiltration des préformes 400 par le métal fondu 6 se termine lorsque la balance 20 mesure une prise de masse prédéterminée correspondant au niveau de densification souhaité pour les préformes. On obtient alors des pièces, ici des secteurs d'anneau, en matériau CMC comprenant un renfort fibreux densifié par une matrice.

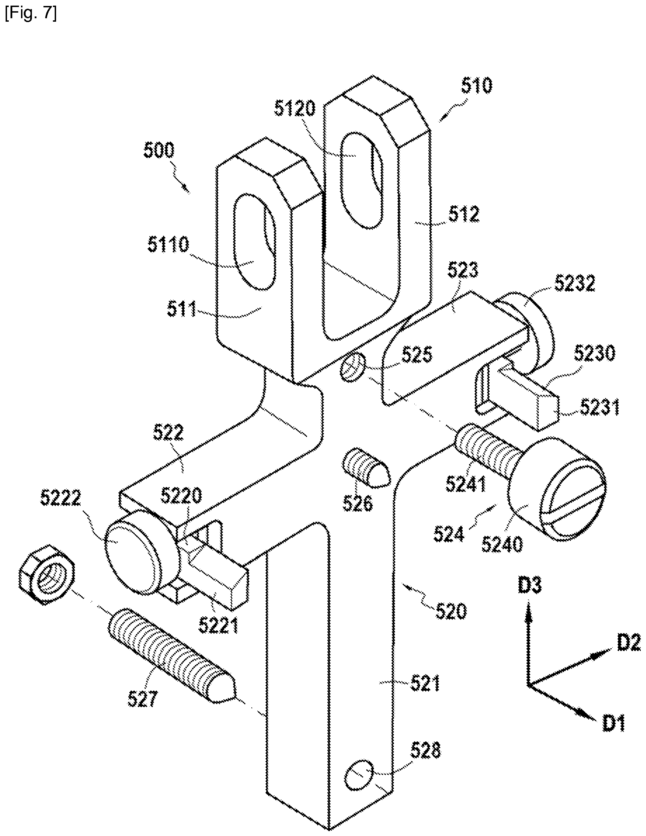

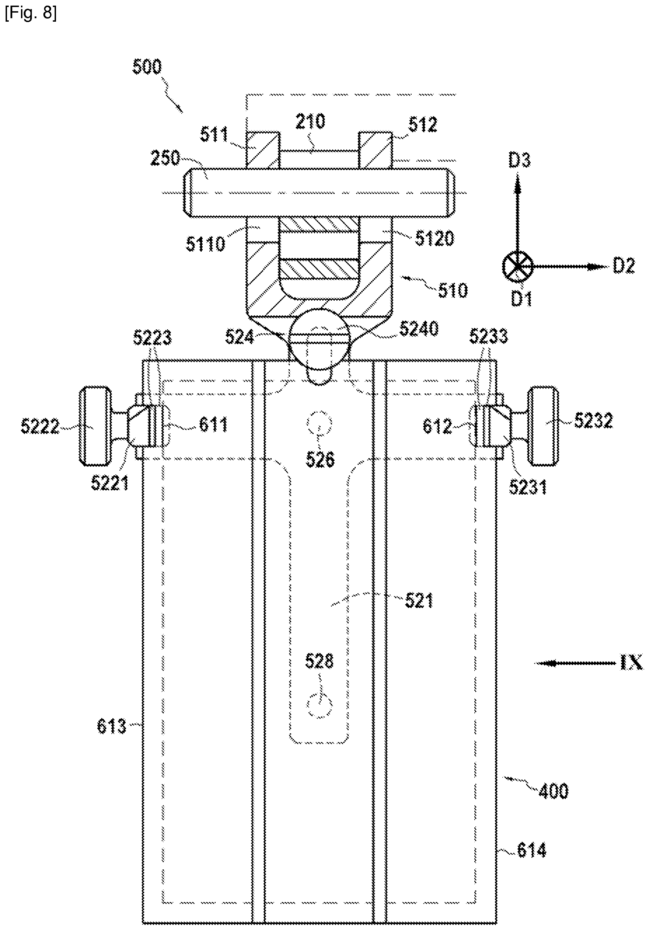

Les figures 7 à 10 illustrent un autre mode de réalisation de supports pour l'outillage de support de l'invention. Sur les figures 7, 8 et 9, le support 500 diffère du support 300 décrit précédemment au niveau de la deuxième partie du support. Plus précisément, le support 500 comprend, comme le support 300 déjà décrit, une première partie 510 formée d'une première oreille 511 comportant un trou oblong 5110 et d'une deuxième oreille 512 comportant un trou oblong 5120. Chaque support 500 peut être monté sur une barre de suspension d'un outillage de support, telles que la barre de suspension 210 de l'outillage de support 100 décrit ci-avant, en plaçant les deux oreilles 511 et 512 d'un côté et de l'autre de la barre et en insérant un axe de suspension 250 dans les trous oblongs 5110 et 5120 des oreilles 511 et 512 comme déjà décrit (figure 8).

Le support 500 comprend en outre une deuxième partie 520 s'étendant à partir de la première partie 510. La deuxième partie 520 est destinée à supporter une préforme poreuse, correspondant ici à une préforme de secteur d'anneau de turbine, par exemple un anneau de turbine haute pression en matériau composite à matrice céramique (CMC) de moteur aéronautique. La réalisation d'un anneau de turbine en matériau CMC par assemblage d'une pluralité de secteurs d'anneau est notamment décrite dans le document US 2018/0142572. Chaque préforme poreuse a une forme voisine de celle du secteur d'anneau à réaliser et présente une section sensiblement en forme de π inversé avec une base annulaire dont la face interne est destinée à définir la veine d'écoulement de flux gazeux dans la turbine et des pattes et s'étendant à partir de la face externe de la base annulaire.

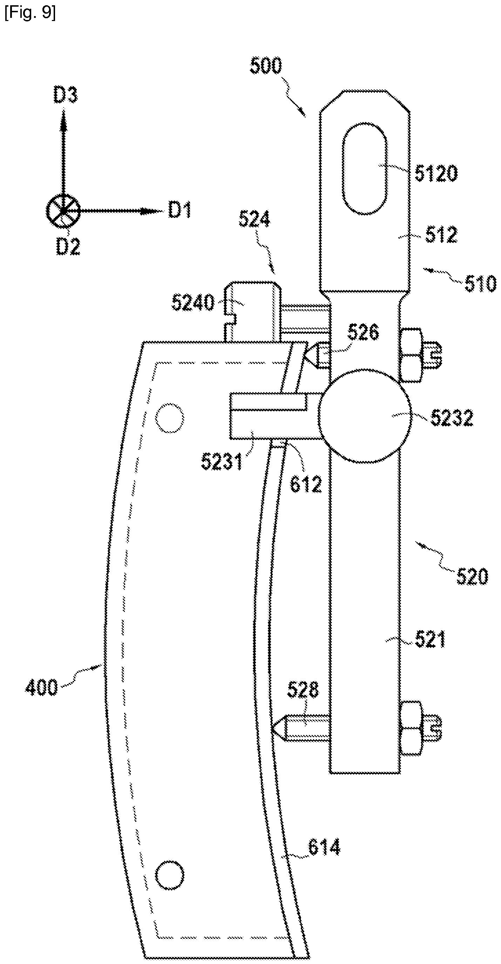

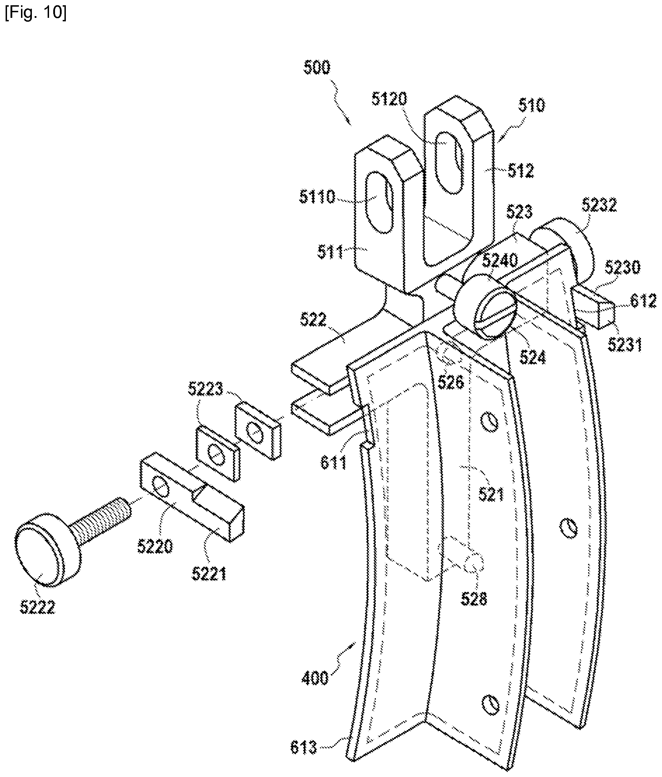

La deuxième partie 520 de chaque support 500 comprend un bras longitudinal 521 s'étendant suivant la troisième direction D3 et deux bras transversaux 522 et 523 s'étendant de chaque côté du bras longitudinal 521 suivant la direction D2. Une première projection 5220 est montée sur le bras transversal 522 au moyen d'une vis de serrage 5222, la projection 5220 s'étendant à partir du bras 522 suivant la direction D1 et présentant une extrémité libre 5221. Une deuxième projection 5230 est montée sur le bras transversal 523 au moyen d'une vis de serrage 5232, la projection 5230 s'étendant à partir du bras 523 suivant la direction D1 et présentant une extrémité libre 5231. Comme illustrées sur les figures 8 et 10, les extrémités libres 5221 et 5231 des première et deuxièmes projections 5220 et 5230 sont aptes à coopérer avec respectivement une première encoche 611 et une deuxième encoche 612 formées respectivement sur les bords circonférentiels 613 et 614 de la base annulaire de la préforme poreuse. Comme illustrée sur la figure 10, chaque préforme poreuse est mise en place sur un support 500 en engageant les extrémités libres 5221 et 5231 des projections 5220 et 5230 respectivement dans les encoches 611 et 612, la préforme étant alors maintenue en suspension par les extrémités libres 5221 et 5231 (figures 8 et 9). Des cales de réglages amovibles 5223 et 5233 peuvent être utilisées afin d'ajuster l'entrefer des projections 5220 et 5230 par rapport à l'écartement entre les encoches 611 et 612 suivant la direction D2. La suspension des préformes par les projections 5220 et 5230 ne nécessitent pas la présence d'orifices sur les pattes des préformes, comme les orifices 421, 431 et 432 décrits précédemment, ce qui permet d'éviter des opérations d'usinage d'orifices dans les préformes lorsque ceux-ci ne sont pas utiles pour la fixation ou le maintien des secteurs d'anneau.

Selon une caractéristique optionnelle du support 500, celui-ci peut comprendre une vis anti-basculement 524 dont la tige filetée 5241 est vissée dans un orifice 525 présent sur la partie supérieure du bras longitudinal 521. La tête 5240 de la vis anti-basculement 524 bloque le basculement de la préforme (figure 9).

Selon une autre caractéristique optionnelle du support 500, celui-ci peut comprendre une butée fixe 526 présente sur la partie supérieure du bras longitudinal 521 afin de limiter par contact ponctuel la translation de la préforme poreuse dans la direction D1.

Toujours selon une autre caractéristique optionnelle du support 500, celui-ci peut comprendre une butée réglable 527 présente sur la partie inférieure du bras longitudinal 521 afin de limiter par contact ponctuel la rotation de la préforme poreuse sur les projections et ainsi positionner la préforme suivant un plan horizontal parallèle à la direction D3 lors des opérations d'infiltration des préformes avec un métal fondu. La butée réglable 527 coopère par vissage avec un orifice 528 présent sur la partie inférieure du bras longitudinal 521.

De même que pour le support 300, le support 500 permet de maintenir de façon fiable une préforme poreuse avec seulement quelques points de contact ponctuels, ce qui permet d'optimiser l'infiltration de la préforme par un métal fondu, tout en facilitant et sécurisant le chargement des préformes sur l'outillage de support. Avec les supports 300 ou 500, l'outillage de support selon l'invention permet de former des chargements comprenant chacun une pluralité de préformes poreuses permettant ainsi un traitement par lots desdites préformes dans un four d'infiltration.

## Revendications

1. Outillage de support (100) pour préformes poreuses (400) destinées à être infiltrées par un métal fondu, l'outillage comprenant :
- un portant (200) comprenant au moins deux barres de suspension (210, 220) s'étendant chacune longitudinalement suivant une première direction (D1), lesdites au moins deux barres de suspensions étant maintenues espacées l'une de l'autre suivant une deuxième direction (D2) perpendiculaire à la première direction ;
- une pluralité de supports de préforme poreuse (300) montés de manière amovible sur les barres de suspension (210, 220), chaque support comprenant une première partie (310) reliée à une des barres de suspension par une liaison coulissante suivant une troisième direction (D3) perpendiculaire aux première et deuxième directions (D1, D2) et une deuxième partie (320) s'étendant à partir de la première partie et comprenant des éléments de support aptes à maintenir une préforme poreuse par contact ponctuel ou linéaire.

2. Outillage selon la revendication 1, dans lequel la première partie (310) de chaque support de préforme poreuse comporte deux oreilles (311, 312) s'étendant suivant la troisième direction (D3), au moins une oreille (311) étant engagée dans une rainure (212) présente sur une des barres de suspension (210) et s'étendant suivant la troisième direction, chaque oreille (311 ; 312) comportant au niveau de son extrémité libre un trou oblong (3110 ; 3120) dans lequel est logé un axe de suspension (250) reposant sur une des barres de suspension.

3. Outillage selon la revendication 2, dans lequel chaque barre de suspension (210 ; 220) comprend une ou plusieurs encoches (211 ; 221) en forme de V aptes à recevoir un axe de suspension.

4. Outillage selon l'une quelconque des revendications 1 à 3, dans lequel la deuxième partie (320) de chaque support de préforme poreuse (300) comprend deux bras longitudinaux (321, 322) s'étendant suivant la troisième direction, chaque bras comportant un ou plusieurs organes de serrage (3210, 3220, 3221) aptes à coopérer avec des orifices (421, 431, 432) présents sur une préforme poreuse (400).

5. Outillage selon la revendication 4, dans lequel chaque bras longitudinal (321 ; 322) de la deuxième partie (320) de chaque support de préforme poreuse (300) comporte un ou plusieurs bossage (3214, 3215, 3224, 3225) sur sa face en regard de l'autre bras.

6. Outillage selon l'une quelconque des revendications 1 à 5, dans lequel la deuxième partie (520) de chaque support de préforme poreuse (500) comprend deux bras transversaux (522, 523) s'étendant suivant la deuxième direction (D2), chaque bras transversal comportant une projection (5220 ; 5230) s'étendant suivant la première direction (D1), chaque projection (5220 ; 5230) étant apte à coopérer avec une encoche (611 ; 612) présente sur la préforme poreuse.

7. Outillage selon la revendication 6, dans lequel la deuxième partie (520) de chaque support de préforme poreuse comprend une vis anti-basculement (524).

8. Outillage selon la revendication 6 ou 7, dans lequel la deuxième partie (520) de chaque support de préforme poreuse (500) comprend une butée réglable (528) présente dans la partie inférieure de la deuxième partie.

9. Four (1) destiné à être utilisé pour infiltrer des préformes poreuses (8) par un métal fondu (6), le four comprenant au moins :
- un outillage de support (100) selon l'une quelconque des revendications 1 à 8, au moins plusieurs supports de la pluralité de support dudit outillage étant chargés d'une préforme poreuse (400),
- un dispositif de mesure (20) de masse auquel est relié l'outillage de support,
- un creuset (4) ayant un volume interne destiné à contenir un métal fondu (6), et
- un dispositif de déplacement (24) apte à déplacer le creuset ou l'outillage de support l'un par rapport à l'autre entre une première configuration dans laquelle les préformes poreuses (400) sont à l'extérieur du volume interne du creuset (4) ou à distance d'un ou plusieurs drains en communication avec le volume interne du creuset et une deuxième configuration dans laquelle les préformes poreuses (400) sont au moins partiellement présentes dans ledit volume interne ou en contact avec ledit ou lesdits drains.

10. Procédé d'infiltration d'une pluralité de préforme poreuses (400) par un métal fondu, l'infiltration étant réalisée dans un four selon la revendication 9, le procédé comprenant :
- le chargement d'une pluralité de préformes poreuses (400) sur un outillage de support (100) selon l'une quelconque des revendications 1 à 8,
- la mise en contact directe ou via un ou plusieurs drains des préformes poreuses (400) avec le métal fondu (6),
- l'infiltration des préformes poreuses (400) par le métal fondu (6),
- la mesure de la masse des préformes poreuses au cours de l'infiltration, et
- le dégagement des préformes poreuses du métal fondu lorsque la masse des préformes mesurée atteint une valeur prédéterminée.

## Patentansprüche

1. Haltewerkzeug (100) für poröse Vorformen (400), die dazu vorgesehen sind, mit einer Metallschmelze durchdrungen zu werden, wobei das Werkzeug umfasst:
- einen Ständer (200), der mindestens zwei Aufhängungsstäbe (210, 220) umfasst, die sich jeweils in Längsrichtung in einer ersten Richtung (D1) erstrecken, wobei die mindestens zwei Aufhängungsstäbe in einer zweiten Richtung (D2) senkrecht zu der ersten Richtung voneinander beabstandet gehalten werden,
- mehrere Halterungen (300) für poröse Vorformen, die abnehmbar an den Aufhängungsstäben (210, 220) angebracht sind, wobei jede Halterung einen ersten Abschnitt (310), der mit einem der Aufhängungsstäbe durch eine Gleitverbindung in einer dritten Richtung (D3) senkrecht zu der ersten und der zweiten Richtung (D1, D2) verbunden ist, und einen zweiten Abschnitt (320), der sich von dem ersten Abschnitt aus erstreckt und Halteelemente umfasst, die geeignet sind, eine poröse Vorform durch Punktkontakt oder linearen Kontakt zu halten, umfasst.

2. Werkzeug nach Anspruch 1, wobei der erste Abschnitt (310) jeder Halterung für poröse Vorformen zwei sich in der dritten Richtung (D3) erstreckende Ansätze (311, 312) beinhaltet, wobei mindestens ein Ansatz (311) in eine Nut (212), die an einem der Aufhängungsstäbe (210) vorhanden ist, eingreift und sich in der dritten Richtung erstreckt, wobei jeder Ansatz (311; 312) an seinem freien Ende ein Langloch (3110; 3120) beinhaltet, in dem ein Aufhängungsbolzen (250) aufgenommen ist, der auf einem der Aufhängungsstäbe aufliegt.

3. Werkzeug nach Anspruch 2, wobei jeder Aufhängungsstab (210; 220) eine oder mehrere V-förmige Kerben (211; 221) umfasst, die geeignet sind, einen Aufhängungsbolzen aufzunehmen.

4. Werkzeug nach einem der Ansprüche 1 bis 3, wobei der zweite Abschnitt (320) jeder Halterung (300) für poröse Vorformen zwei Längsarme (321, 322) umfasst, die sich in der dritten Richtung erstrecken, wobei jeder Arm ein oder mehrere Klemmelemente (3210, 3220, 3221) beinhaltet, die geeignet sind, mit Öffnungen (421, 431, 432) zusammenzuwirken, die in einer porösen Vorform (400) vorhanden sind.

5. Werkzeug nach Anspruch 4, wobei jeder Längsarm (321; 322) des zweiten Abschnitts (320) jeder Halterung (300) für poröse Vorformen eine oder mehrere Erhebungen (3214, 3215, 3224, 3225) auf seiner dem anderen Arm zugewandten Seite beinhaltet.

6. Werkzeug nach einem der Ansprüche 1 bis 5, wobei der zweite Abschnitt (520) jeder Halterung (500) für poröse Vorformen zwei Querarme (522, 523) umfasst, die sich in der zweiten Richtung (D2) erstrecken, wobei jeder Querarm einen Vorsprung (5220; 5230) beinhaltet, der sich in der ersten Richtung (D1) erstreckt, wobei jeder Vorsprung (5220; 5230) geeignet ist, mit einer Kerbe (611; 612) zusammenzuwirken, die in der porösen Vorform vorhanden ist.

7. Werkzeug nach Anspruch 6, wobei der zweite Abschnitt (520) jeder Halterung für poröse Vorformen eine Anti-Kipp-Schraube (524) umfasst.

8. Werkzeug nach Anspruch 6 oder 7, wobei der zweite Abschnitt (520) jeder Halterung (500) für poröse Vorformen einen verstellbaren Anschlag (528) umfasst, der in dem unteren Abschnitt des zweiten Abschnitts vorhanden ist.

9. Ofen (1), der dazu vorgesehen ist, zum Durchdringen von porösen Vorformen (8) mit einer Metallschmelze (6) verwendet zu werden, wobei der Ofen mindestens umfasst:
- ein Haltewerkzeug (100) nach einem der Ansprüche 1 bis 8, wobei mindestens mehrere Halterungen der mehreren Halterungen des Werkzeugs mit einer porösen Vorform (400) beladen sind,
- eine Massemessvorrichtung (20), mit der das Haltewerkzeug verbunden ist,
- einen Schmelztiegel (4), der ein Innenvolumen aufweist, das dazu vorgesehen ist, eine Metallschmelze (6) aufzunehmen, und
- eine Bewegungsvorrichtung (24), die geeignet ist, den Schmelztiegel oder das Haltewerkzeug im Verhältnis zueinander zwischen einer ersten Konfiguration, in der sich die porösen Vorformen (400) außerhalb des Innenvolumens des Schmelztiegels (4) oder in einem Abstand zu einem oder mehreren Abflüssen in Verbindung mit dem Innenvolumen des Schmelztiegels befinden, und einer zweiten Konfiguration, in der sich die porösen Vorformen (400) zumindest teilweise in dem Innenvolumen oder in Kontakt mit dem oder den Abflüssen befinden, zu bewegen.

10. Verfahren zum Durchdringen mehrerer poröser Vorformen (400) mit einer Metallschmelze, wobei das Durchdringen in einem Ofen nach Anspruch 9 durchgeführt wird, wobei das Verfahren umfasst:
- Laden mehrerer poröser Vorformen (400) in ein Haltewerkzeug (100) nach einem der Ansprüche 1 bis 8,
- Inkontaktbringen der porösen Vorformen (400) mit der Metallschmelze (6) direkt oder über einen oder mehrere Abflüsse,
- Durchdringen der porösen Vorformen (400) mit der Metallschmelze (6),
- Messen der Masse der porösen Vorformen während des Durchdringens und
- Lösen der porösen Vorformen von der Metallschmelze, wenn die gemessene Masse der Vorformen einen vorbestimmten Wert erreicht.

## Claims

1. Support tooling (100) for porous preforms (400) intended to be infiltrated by a molten metal, the tooling comprising:
- a rack (200) comprising at least two suspension bars (210, 220) each extending longitudinally along a first direction (D1), said at least two suspension bars being held spaced apart from one another along a second direction (D2) perpendicular to the first direction;
- a plurality of porous preform supports (300) removably mounted on the suspension bars (210, 220), each support comprising a first portion (310) connected to one of the suspension bars by a connection sliding along a third direction (D3) perpendicular to the first and second directions (D1, D2) and a second portion (320) extending from the first portion and comprising support elements which are able to hold a porous preform by point or linear contact.

2. The tooling according to claim 1, wherein the first portion (310) of each porous preform support includes two lugs (311, 312) extending along the third direction (D3), at least one lug (311) being engaged in a groove (212) present on one of the suspension bars (210) and extending along the third direction, each lug (311; 312) including at its free end an oblong hole (3110; 3120) in which is housed a suspension shaft (250) resting on one of the suspension bars.

3. The tooling according to claim 2, wherein each suspension bar (210; 220) comprises one or more V shaped notches (211; 221) which are able to receive a suspension shaft.

4. The tooling according to any one of claims 1 to 3, wherein the second portion (320) of each porous preform support (300) comprises two longitudinal arms (321, 322) extending along the third direction, each arm including one or more clamping members (3210, 3220, 3221) which are able to cooperate with openings (421, 431, 432) present on a porous preform (400).

5. The tooling according to claim 4, wherein each longitudinal arm (321; 322) of the second portion (320) of each porous preform support (300) includes one or more bosses (3214, 3215, 3224, 3225) on its face facing the other arm.

6. The tooling according to any one of claims 1 to 5, wherein the second portion (520) of each porous preform support (500) comprises two transverse arms (522, 523) extending along the second direction (D2), each transverse arm including a projection (5220; 5230) extending along the first direction (D1), each projection (5220; 5230) being able to cooperate with a notch (611; 612) present on the porous preform.

7. The tooling according to claim 6, wherein the second portion (520) of each porous preform support comprises an anti-rocking screw (524).

8. The tooling according to claim 6 or 7, wherein the second portion (520) of each porous preform support (500) comprises an adjustable stop (528) present in the lower portion of the second portion.

9. An oven (1) intended to be used for infiltrating porous preforms (8) by a molten metal (6), the oven comprising at least:
- support tooling (100) according to any one of claims 1 to 8, at least several supports of the plurality of supports of said tooling being located with a porous preform (400),
- a mass measurement device (20) to which the support tooling is connected,
- a crucible (4) having an internal volume intended to contain a molten metal (6), and
- a movement device (24) which is able to move the crucible or the support tooling relative to one another between a first configuration in which the porous preforms (400) are outside the internal volume of the crucible (4) or at a distance from one or more drains in communication with the internal volume of the crucible and a second configuration in which the porous preforms (400) are at least partially present in said internal volume or in contact with said drain(s).

10. A method of infiltrating a plurality of porous preforms (400) by a molten metal, the infiltration being accomplished in an oven according to claim 9, the method comprising:
- charging a plurality of porous preforms (400) on support tooling (100) according to any one of claims 1 to 8,
- placing porous preforms (400) in direct contact or via one or more drains with the molten metal (6),
- infiltrating porous preforms (400) by molten metal (6),
- measuring the mass of the porous preforms during infiltration, and
- separating the porous preforms from the molten metal when the measured mass of the preforms reaches a predetermined value.
